Europäisches Patentamt

European Patent Office

Office européen des brevets

(19)

(11) **EP 1 392 455 B1**

(12) **EUROPÄISCHE PATENTSCHRIFT**

(45) Veröffentlichungstag und Bekanntmachung des Hinweises auf die Patenterteilung:
**27.07.2005 Patentblatt 2005/30**

(21) Anmeldenummer: 02750922.3

(22) Anmeldetag: **14.05.2002**

(51) Int Cl.$^7$: **B07C 7/00**, G01N 1/00

(86) Internationale Anmeldenummer:
**PCT/EP2002/005278**

(87) Internationale Veröffentlichungsnummer:
**WO 2002/092248 (21.11.2002 Gazette 2002/47)**

(54) **VERFAHREN ZUM AUTOMATISIERTEN AUSWÄHLEN VON BLECHEN, INSBESONDERE STAHLBLECHEN, FÜR DAS UMFORMEN ZU BAUELEMENTEN**

METHOD FOR AUTOMATIC SELECTION OF SHEET METAL, ESPECIALLY SHEET METAL FOR FORMING COMPONENTS

PROCEDE DE SELECTION AUTOMATIQUE DE TOLES, EN PARTICULIER DE TOLES D'ACIER, UTILISEES POUR FORMER DES COMPOSANTS

(84) Benannte Vertragsstaaten:
**AT BE CH CY DE DK ES FI FR GB GR IE IT LI LU MC NL PT SE TR**

(30) Priorität: **14.05.2001 DE 10123302**

(43) Veröffentlichungstag der Anmeldung:
**03.03.2004 Patentblatt 2004/10**

(73) Patentinhaber: **ThyssenKrupp Stahl AG**
**47166 Duisburg (DE)**

(72) Erfinder:
• **GERLACH, Jörg**
**47199 Duisburg (DE)**
• **PAUL, Udo**
**47167 Duisburg (DE)**
• **BLÜMEL, Klaus**
**46537 Dinslaken (DE)**

(74) Vertreter: **Simons, Johannes, Dipl.-Ing.**
**COHAUSZ & FLORACK**
**Patent- und Rechtsanwälte**
**Bleichstrasse 14**
**40211 Düsseldorf (DE)**

(56) Entgegenhaltungen:
**EP-A- 0 123 456          EP-A- 0 203 659**
**DE-A- 10 054 385          US-A- 6 059 121**

**Beschreibung**

Die Erfindung betrifft ein Verfahren zum automatisierten Auswählen von Blechen, insbesondere Stahl- oder Leichtmetallblechen.

Die Herstellung von Bauteilen durch Umformen von Blechen stellt eine komplexe Aufgabe dar, die von einer Vielzahl von Faktoren abhängt. So spielen beispielsweise die beim Umformen abzubildende Stempelgeometrie, die Form der für den Umformvorgang jeweils zugeschnittenen Platine, die sich während des Umformens einstellenden Reibungsverhältnisse, die zeitliche und örtliche Verteilung des von einem Niederhalter im Randbereich der Platine ausgeübten Drucks und der Einsatz von Ziehleisten zur Steuerung des Materialflusses eine Rolle.

Wesentlichen Einfluß auf den Verlauf und das Ergebnis des Umformvorgangs haben darüber hinaus die Werkstoffeigenschaften des umzuformenden Blechs. Der Auswahl des für die jeweilige Umformaufgabe bestmöglich geeigneten Werkstoffs kommt daher eine besondere Bedeutung zu.

Die Auswahl eines Blechs, welches zum einen die Anforderungen des Umformprozesses und zum anderen die an das aus ihm erzeugte Bauteil gestellten Anforderungen optimal erfüllt, wird dadurch erschwert, daß es verursacht durch Ungleichförmigkeiten des Produktionsprozesses zu Schwankungen der Eigenschaften auch von solchen Blechen kommen kann. Diese können so weit gehen, daß die Umformeigenschaften beträchtlich verschlechtert werden, so daß die ihren normierten Werkstoffkennwerten nach die an gut verformbare Bleche gestellten Anforderungen erfüllenden Bleche tatsächlich zu einem fehlerhaften Bauteil führen.

Um die Breite der Eigenschaftsschwankungen von für das Umformen bestimmten Blechen einschätzen zu können, werden die Eigenschaften einer größeren Anzahl von Blechen erfaßt, die zum selben Blechtyp gehören, jedoch aus unterschiedlichen Fertigungschargen entnommen werden. In der Praxis zeigt sich allerdings, daß dieses Vorgehen nur zu unzureichend zuverlässigen Ergebnissen führt, da die Schwankungen der Eigenschaften des Werkstoffs nur schwer gezielt erzeugt werden können. Aus diesem Grund ist eine systematische Feststellung der Schwankung in der Praxis kaum möglich. Zudem kann es zu nicht vorhersehbaren Störungen oder Beeinflussungen bei der Herstellung der Bleche kommen, die wiederum nicht vorhersagbare Änderungen der Eigenschaften der Bleche nach sich ziehen.

Eine andere Möglichkeit der Ermittlung von auch unter Berücksichtigung unvermeidbarer Eigenschaftsschwankungen für das Umformen zu Bauteilen verwendbarer Bleche besteht in der Anwendung mathematischer Berechnungsverfahren. Diesen numerischen Verfahren liegt in der Regel die Finite-Elemente-Methode ("FEM") zugrunde. Die FEM ermöglicht die mathematische Beschreibung eines Umformvorgangs bei bekannten Rand- und Prozeßbedingungen.

Ausgehend von dem FEM-Model des Umformvorgangs werden gemäß dem Stand der Technik unter Anwendung statistischer Verfahren und unter Zugrundelegung von bestimmten Werkstoffeigenschaften bekannter Bleche die Eingangsparameter der FEM-Berechnung solange variiert, bis das jeweils betrachtete Merkmal des Umformprozesses einem Sollwert entgegenstrebt. Ein Problem besteht bei einer solchen statistischen Vorgehensweise bekanntermaßen darin, daß aufgrund der endlichen Parametervariation der tatsächliche Sollwert nicht sicher gefunden wird.

Ein ähnliches Problem besteht bei Anwendung eines der sogenannten "Gradientenverfahren", welche zwar bei Konvergenz des betrachteten Merkmals auf Minima führen, die aber bei mehrdimensionalen Problemstellungen in der Regel nur lokale Minima innerhalb eines bestimmten Gebiets ergeben, ohne die Gesamtheit aller möglichen Lösungen abzudecken. Eine weitere Schwierigkeit besteht in diesem Zusammenhang darin, daß auch die Gradientenverfahren stark abhängig sind von den Ausgangsbedingungen der Suche.

Schließlich erfordern die große Zahl der für die bekannten numerischen Methoden erforderlichen Berechnungen enorme Rechnerleistung, die sich selbst mit den heutzutage zur Verfügung stehenden Datenverarbeitungseinrichtungen nicht in einer in der täglichen Anwendung zufriedenstellenden Weise bewerkstelligen lassen. Insbesondere überfordern die benötigten Rechenleistungen die in der Praxis zur Verfügung stehenden Rechner dann, wenn die Auswahl des für den jeweiligen Umformprozeß am besten geeigneten Werkstoffs automatisiert erfolgen soll.

Aufgabe der Erfindung war es daher, ein Verfahren zu schaffen, welches bei minimierter Anforderung an die Rechenleistung und mit hoher Zuverlässigkeit eine automatisierte Auswahl von für einen beliebigen Umformprozeß günstigen Blechen ermöglicht.

Diese Aufgabe wird durch ein Verfahren zum automatisierten Auswählen von Blechen, insbesondere Stahlblechen, für das Umformen zu Bauelementen gelöst, welches folgende Schritte umfaßt:

a1) Bereitstellen der Werte der Werkstoffeigenschaften von für das Umformen grundsätzlich geeigneten Blechen,

a2) Vorgeben der Grenzen von Sollbereichen, innerhalb welcher für das Umformverhalten bestimmende Werkstoffeigenschaften des endlich ausgewählten Blechs liegen sollen,

a3) Festlegen einer den Einfluß der betreffenden Werkstoffeigenschaften auf mindestens ein Merkmal des Umformverhaltens der Bleche beschreibenden mathematischen Funktion, in der den betreffenden Werkstoffeigenschaften jeweils Variablen zugeordnet sind und mindestens einer der Variablen ein zu diesem Zeitpunkt unbestimmter Koeffizient zugeordnet ist,

b) Ermitteln der Werte des Merkmals des Umformverhaltens für jeweils unterschiedliche Kombinationen von Werten der Werkstoffeigenschaften, wobei die miteinander kombinierten Werte jeweils den im Schritt a2) vorgegebenen Sollbereichen der Werkstoffeigenschaften entnommen sind und die Anzahl der Kombinationen, für die das Merkmal der Umformbarkeit jeweils bestimmt wird, mindestens gleich der Anzahl der unbestimmten Koeffizienten der mathematischen Funktion ist,

c) Bestimmen der bis dahin unbestimmten Koeffizienten der im Schritt a3) vorgegebenen mathematischen Funktion,

d) Bestimmen des jeweiligen Wertes des Merkmals der Umformeigenschaft für jedes Blech, dessen Werte der Werkstoffeigenschaften im Schritt a1) bereitgestellt worden sind, durch Einsetzen der Werte der Werkstoffeigenschaften des jeweiligen Blechs in die mathematische Funktion unter Verwendung der in Schritt c) bestimmten Koeffizienten,

e) Ausgeben des Blechs, für welches das im Schritt d) bestimmte Merkmal der Umformeigenschaft unter Berücksichtigung eines vorgegebenen Auswahlkriteriums am besten erfüllt ist.

Anders als beim Stand der Technik wird gemäß der Erfindung nicht eine mehr oder weniger systematische Suche nach einem Minimum durchgeführt, sondern es wird eine mathematische Formel bestimmt, die den Einfluß der Werkstoffeigenschaften auf das jeweils betrachtete Merkmal des Umformverhaltens des Werkstoffs beschreibt. Diese Funktion wird anschließend genutzt, um eindeutig und gezielt das Blech zu bestimmen, welches die an das betreffende Merkmal gestellten Anforderungen optimal erfüllt.

Bei den für das Umformverhalten der Bleche wesentlichen Merkmalen kann es sich beispielsweise um die Rißfreiheit des aus dem jeweiligen Blech erzeugten Bauteils, die jeweilige Ausdünnung, ein bestimmtes Dehnungsverhalten, eine bestimmte Steifigkeit des erhaltenen Bauelements etc. handeln.

Für die Durchführung des erfindungsgemäßen Verfahrens werden im ersten Schritt Daten angegeben, die bei den weiteren Schritten der Auswahl des Blechs berücksichtigt werden. Dies sind einerseits die Werkstoffkennwerte der zur Auswahl stehenden Bleche (Schritt a1). Zudem sind es die Grenzen der Bereiche, innerhalb derer die betreffenden Werkstoffkennwerte liegen sollen (Schritt a2). Schließlich ist es der mathematische Zusammenhang, der den Einfluß der Werkstoffeigenschaften auf das Umformverhalten beschreibt (Schritt a3).

Es hat sich herausgestellt, daß eine Vielzahl der an das Umformverhalten von Blechen, insbesondere Stahlblechen, gestellten Anforderungen linear mit den Werkstoffeigenschaften korreliert. Dies überrascht insofern, als das Umformverhalten von Blechwerkstoffen durch nichtlineare Zusammenhänge zwischen den Inkrementen durch Spannungen und Dehnungen gekennzeichnet ist. Es konnte jedoch für verschiedenste Bauteile und unterschiedliche Verformungsverfahren, wie Tief- oder Streckziehen mit oder ohne Wirkmedium, gezeigt werden, daß eine Bewertung wichtiger Merkmale des Umformverhaltens, wie Rißfreiheit des erhaltenen Bauteils oder eine bestimmte geforderte Ausstreckung von Teilbereichen des Bauteils mit einer linearen Regression zu den Werkstoffen gelingt. Daher wird gemäß einer ersten Ausgestaltung der Erfindung als den Zusammenhang von betrachtetem Merkmal und Werkstoffeigenschaften beschreibende mathematische Funktion ein linearer Zusammenhang vorgegeben.

Es können grundsätzlich auch nicht lineare mathematische Zusammenhänge zur Beschreibung der Abhängigkeit des jeweils im Mittelpunkt stehenden Merkmals genutzt werden. Der Vorzug der Verwendung einer linearen Gleichung für diesen Zweck besteht jedoch in der einfachen mathematischen Handhabung und der damit verbundenen geringen Anforderung an die Rechnerleistung bei der Ermittlung von Werten unter Anwendung einer solchen linearen Formel sowie der geringen Anzahl der numerischen Versuche.

Für einige der in der Praxis bedeutsamsten Fälle hat sich bei der Verwendung einer linearen Formel zur Beschreibung des Einflusses der Werkstoffeigenschaften auf das jeweils betrachtete Merkmal gezeigt, daß sich eine sichere Beschreibung der Auswirkung einer Variation der Werkstoffeigenschaften auf das Ergebnis der Umformung mit durch die Wirklichkeit regelmäßig bestätigten Ergebnissen dann gewährleistet werden kann, wenn die mathematische Funktion mindestens vier Variablen enthält. So hat es sich beispielsweise erwiesen, daß sich die plastische Dehnung und die Rißfreiheit dann sicher vorausberechnen lassen, wenn in der zur Beschreibung dieser Merkmale des Umformverhaltens verwendeten, vier Variablen aufweisenden linearen Gleichung einer der Variablen die Streckgrenze, einer die Zugfestigkeit, einer der Verfestigungsexponent und einer dem mittleren r-Wert zugeordnet ist.

Innerhalb der zur Beschreibung des Umformverhaltens gewählten Formel ist mindestens einer, in der Regel jedoch jeder, der Variablen ein Koeffizient zugeordnet.

Zusätzlich kann eine nicht an eine Variable gebundene Konstante vorhanden sein. Die Werte der Koeffizienten und Konstanten sind am Beginn des erfindungsgemäßen Verfahrens unbekannt und werden im Laufe des Verfahrens anhand der durchgeführten Schritte b) und c) ermittelt. Im Ergebnis wird so eine mathematische Beschreibung in Form einer Formel erhalten, deren Koeffizient und Konstanten bekannt sind und mit der für jedes bekannte Blech der Einfluß seiner Werkstoffeigenschaften auf das jeweils betrachtete Merkmal des Umformverhaltens bestimmt werden kann.

Für die Ermittlung der Koeffizienten der mathematischen Formel werden unter Zugrundelegung von Werkstoffkennwerten, die aus den für die Werkstoffeigenschaften vorgegebenen Sollbereichen entnommen sind, anhand eines Modells Werte des jeweils betrachteten Merkmals des Umformverhaltens ermittelt. Bei dem dazu verwendeten Modell handelt es sich vorzugsweise um eine numerische Beschreibung des Umformvorgangs. Besonders bewährt hat sich zu diesem Zweck die Finite-Elemente-Methode.

Die Bestimmung der Koeffizienten und Konstanten selbst kann dann in an sich bekannter Weise durch Auflösung eines Systems von linearen Gleichungen erfolgen, deren Anzahl der für die Ermittlung der Koeffizienten und Konstanten notwendigen Zahl entspricht. Eine höhere Genauigkeit der Bestimmung der Koeffizienten und Konstanten läßt sich jedoch dadurch erreichen, daß diese in an sich aus dem Bereich der mathematischen Statistik bekannter Weise basierend auf einer größeren Datenmenge durch lineare Regression ermittelt werden.

Eindeutige, einfach nachvollziehbare Kombinationen von Werkstoffkennwerten stehen dann zur Verfügung, wenn im Schritt b) des erfindungsgemäßen Verfahrens Werte der Werkstoffeigenschaften miteinander kombiniert werden, die jeweils einer der Grenzen der Sollbereiche der Werkstoffeigenschaften entsprechen. Die betreffenden Werkstoffkennwerte werden bevorzugt in an sich bekannter Weise nach einem Versuchsplan systematisch miteinander kombiniert. Dabei wird üblicherweise eine über die zur Bestimmung der unbekannten Koeffizienten und Konstanten benötigte Anzahl von Wertekombinationen hinausgehende Zahl von Kombinationen ausgewählt, um die Möglichkeit einer Fehlerminimierung durch beispielsweise Vergleich oder Mittelung bei der Ermittlung der Koeffizienten zu haben.

Da die Qualität des Umformverhaltens von Blechen in der Regel nicht nur durch ein einziges Merkmal bestimmt ist, ist es zweckmäßig, die Wahl des jeweiligen Blechs unter Abwägung des Einflusses der Werkstoffeigenschaften der zur Auswahl stehenden Bleche auf jedes der wesentlichen Merkmale zu treffen. Sind zwei Merkmale von entscheidender Bedeutung für die Eignung eines Blechs zur Durchführung der jeweiligen Umformaufgabe, so läßt sich dies beispielsweise dadurch bewerkstelligen, daß die Schritte a3) bis d) für mindestens zwei unterschiedliche Merkmale der Umformeigenschaft ermittelt werden und daß das im Schritt e) berücksichtigte Auswahlkriterium die Einhaltung eines Sollwertes für jedes dieser Merkmale berücksichtigt.

Nachdem in erfindungsgemäßer Weise die Koeffizienten und Konstanten der für die Beschreibung des Einflusses der Werkstoffeigenschaften verwendeten Formel ermittelt worden sind, können problemlos auch die verschiedenen Chargen des als geeignet ermittelten Blechtyps hinsichtlich ihrer tatsächlichen Eignung für die Umformaufgabe einzelnen beurteilt werden. Der dazu erforderliche Rechenaufwand beschränkt sich auf das Ausrechnen der Gleichung unter Verwendung der für die jeweils zur Verarbeitung anstehenden Charge festgestellten Werkstoffeigenschaften und das Auswerten eines Ausscheidungskriteriums, anhand dessen die tatsächliche Eignung festgestellt wird.

Aufgrund der geringen Anzahl von Rechenoperationen, der Eindeutigkeit des Ergebnisses und der Bestimmtheit der für die Durchführung des Verfahrens benötigten Vorgaben läßt sich das erfindungsgemäße Verfahren problemlos auf konventionellen Rechnern automatisiert so durchführen, daß im Ergebnis zuverlässig ein für die Umformaufgabe optimal geeigneter Werkstoff zur Verfügung steht.

Nachfolgend wird die Erfindung anhand eines Ausführungsbeispiels näher erläutert. Es zeigen:

Diag. 1a-1c    den Ablauf der Ermittlung eines für die Tiefzieh-Umformung zur Außenhaut einer Kraftfahrzeugtür geeigneten Stahlblechs,

Diag. 2a    die unter Zugrundelegung der Werkstoffeigenschaften von zehn Stahlblechen StB1 bis StB10 berechneten Werte des Merkmals "Fläche mit ungenügender plastischer Dehnung",

Diag. 2b    die unter Zugrundelegung der Werkstoffeigenschaften der zehn Stahlbleche StB1 bis StB10 berechneten Werte des Merkmals "Rißfreiheit",

Diag. 3a    die für verschiedene, zu einer als geeignet ermittelten Blechsorte gehörenden Bleche berechneten Werte des Merkmals "Fläche mit ungenügender plastischer Dehnung",

Diag. 3b    die für verschiedene, zu einer als geeignet ermittelten Blechsorte gehörenden Bleche berechneten Werte des Merkmals "Rißfreiheit".

Für die Auswahl des für die Umformaufgabe "Herstellen der Außenhaut einer Kraftfahrzeugtür durch Tiefziehen" geeigneten Stahlblechs sind für zehn Stahlbleche StB[1] ... StB[10] in einem Datenspeicher die Werkstoffeigenschaften Streckgrenze "Rp", Zugfestigkeit "Rm", Verfestigungsexponent "n" und mittlerer "r"-Wert abgelegt.

Ebenso sind in einem Datenspeicher die Grenzen $Rp_{min}$, $Rp_{max}$, $Rm_{min}$, $Rm_{max}$, $n_{min}$, $n_{max}$, $r_{min}$, $r_{max}$ der Bereiche abgelegt, in denen der jeweilige Wert der Streckgrenze Rp, der Zugfestigkeit Rm, des Verfestigungsexponents n und des r-Werts bei den zur Auswahl stehenden Stahlblechen StB[1] ... StB[10] liegen sollen.

In weiteren Datenspeichern sind die zur Beschreibung des Einflusses der Streckgrenze Rp, der Zugfestigkeit Rm, des Verfestigungsexponents n und des r-Wertes auf die Merkmale Mpd "Fläche mit ungenügender plastischer Dehnung" und Mriss "Rißfreiheit" dienenden linearen mathematischen Formeln

$$F1: Mriss = K_{Rm\_riss}*Rm + K_{Rp\_riss}*Rp + K_{n\_riss}*n + K_{r\_riss}*r + K_{riss}$$

und

$$F2: Mpd = K_{Rm\_pd}*Rm + K_{Rp\_pd}*Rp + K_{n\_pd}*n + K_{r\_pd}*r + K_{pd}$$

hinterlegt.

Zusätzlich steht eine Recheneinheit zur Verfügung, auf der ein FEM-Programm implementiert ist. Das FEM-Programm bildet ein numerisches Modell der bei der Umformung eines Stahlblechs zu der Außenhaut der herzustellenden Kraftfahrzeugtür ablaufenden Kaltumformvorgänge unter Berücksichtigung der Werkstoffeigenschaften Rp, Rm, n, r des jeweils zur Verarbeitung vorgesehenen Stahlblechs ab.

Schließlich sind in Datenspeichern ein Kriterium Q, welches die für die Beurteilung der Qualität der Erfüllung der an die Merkmale Mpd und Mriss gestellten Anforderungen geltenden Anforderungen enthält, und Angaben zum Toleranzbereich abgespeichert, bei dessen Erreichen das Kriterium Q als erfüllt gilt.

Ausgehend von diesen Vorgaben werden in einem automatisch ablaufenden Vorgang folgende Arbeitsschritte absolviert:

Im ersten Schritt des Verfahrensablaufs werden aus den Werten $Rp_{min}$, $Rp_{max}$, $Rm_{min}$, $Rm_{max}$, $n_{min}$, $n_{max}$, $r_{min}$, $r_{max}$ nach einem teilfaktoriellen Versuchsplan, einem an sich bekannten Verfahren der mathematischen Statistik, acht Kombinationen K[1] ... K[8] gebildet.

Für jede dieser Kombinationen K[1] ... K[8] wird dann durch das FEM-Programm der zugehörige Wert Mriss[1] ... Mriss[10] des Merkmals "Rißfreiheit" und der zugehörige Wert Mpd[1] ... Mpd[10] ermittelt. Dabei wird beispielsweise bei Berechung der Werte der Merkmale Mriss[3] und Mpd[3] für die Kombination K[3] dem FEM-Programm als Wert für die Streckgrenze Rp die Untergrenze $Rp_{min}$ des zugehörigen Sollbereichs, als Wert für die Zugfestigkeit Rm die Obergrenze $Rp_{max}$ des zugehörigen Sollbereichs, als Wert für den Verformungsexponenten n die Obergrenze $n_{max}$ des zugehörigen Sollbereichs und als Wert für den r-Wert die Untergrenze $r_{min}$ des zugehörigen Sollbereichs vorgegeben.

Damit stehen die Daten zur Verfügung, auf deren Basis die bis zu diesem Zweitpunkt noch unbekannten Koeffizienten $K_{Rm\_riss}$, $K_{Rp\_riss}$, $K_{n\_riss}$, $K_{r\_riss}$, $K_{Rm\_pd}$, $K_{Rp\_pd}$, $K_{n\_pd}$, $K_{r\_pd}$ sowie die Konstanten $K_{pd}$ und $K_{riss}$ der linearen Formeln F1 und F2 durch lineare multiple Regression bestimmt werden können.Mit den um die so bestimmten Koeffizienten $K_{Rm\_riss}$, $K_{Rp\_riss}$, $K_{n\_riss}$, $K_{r\_riss}$, bzw. $K_{Rm\_pd}$, $K_{Rp\_pd}$, $K_{n\_pd}$, $K_{r\_pd}$ sowie die Konstanten $K_{pd}$ bzw. $K_{riss}$ ergänzten mathematischen Formeln F1 bzw. F2 werden anschließend für die an den Stahlblechen StB[j] gemessenen Werkstoffeigenschaften Rp[j], Rm[j], n[j] und r[j] die Werte Mriss[j] des Merkmals "Rißfreiheit" Mriss und die Werte Mpd [j] des Merkmals "Fläche mit ungenügender plastischer Dehnung" Mpd berechnet. Die Ergebnisse dieser Berechnung sind für das Merkmal Mpd im Diag. 2a und für das Merkmal Mriss im Diag. 2b eingetragen.

Das Kriterium Q beinhaltet die Anforderung, daß ein Stahlblech nur dann für die Umformaufgabe geeignet ist, wenn der zugehörige Wert des Merkmals Mpd nahe "0" und der zugehörige Wert des Merkmals Mriss positiv sind. Für das Merkmal Mpd gilt diese Forderung als erfüllt, wenn der jeweilige Wert des Merkmals Mpd im Bereich von 0 bis 5000 liegt, während die Forderung für das Merkmal Mriss nur dann erfüllt ist, wenn der jeweilige Wert des Merkmals Mriss im Bereich von 0 bis + 0,25 liegt.

Von den Blechen StB[1] ... StB[10] erfüllen somit nur die Bleche StB[5] und StB[8] diese Anforderung. Beispielsweise beim Blech StB[10] oder beim Blech StB[1] sind zwar die Anforderungen an den Wert des Merkmals Mriss erfüllt. Der Wert des Merkmals Mpd überschreitet jedoch in beiden Fällen die Grenze des Toleranzbereichs, so daß auch diese Stahlbleche StB[1] und StB[10] aus der Auswahl ausscheiden mußten. Dementsprechend werden nur die Bleche StB[5] und StB[8] als zur Verwendung für die Herstellung der Außenhaut der Kraftfahrzeugtür geeignet ausgegeben.

Um sicherzustellen, daß tatsächlich für jede Charge der Stahlbleche StB[5] und StB[8] die Anforderungen des Kriteriums Q unter Berücksichtigung des Toleranzbereichs gelten, werden für jede Charge A1 bis A5 der Bleche StB[5] und für jede Charge B1 bis B5 der Bleche StB[8] die Werkstoffeigenschaften Rp, Rm, n und r gemessen. Mit den gemessenen Werten werden dann für jede der Chargen A1 bis A5 und B1 bis B5 die Werte der Merkmale Mpd und Mriss mit Hilfe der Formeln F1 und F2 berechnet. Es zeigt sich, daß die Stahlbleche StB[8] die Anforderungen des Kriteriums Q mit höherer Zuverlässigkeit erfüllen als die Stahlbleche StB[5], von denen die Bleche der Charge A3 und A5 die an den Wert des Merkmals Mpd gestellte Anforderung auch unter Berücksichtigung der zulässigen Toleranz nicht erfüllen (Diag. 3a, Diag. 3b).

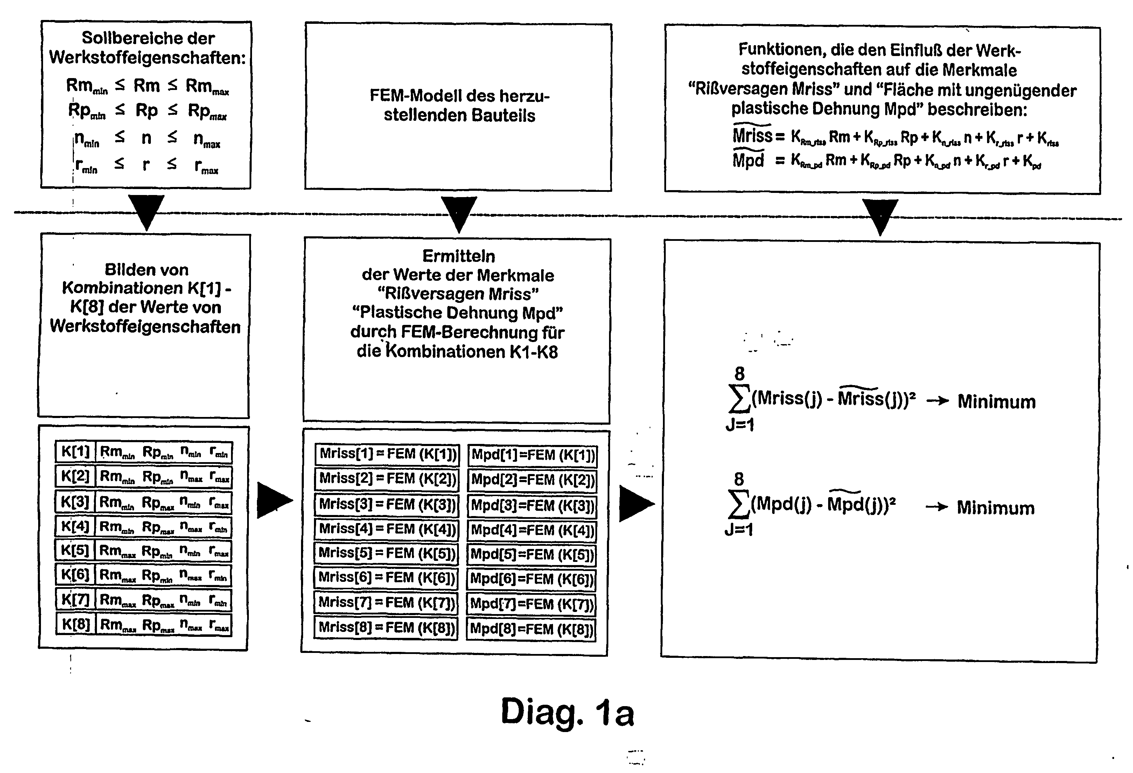

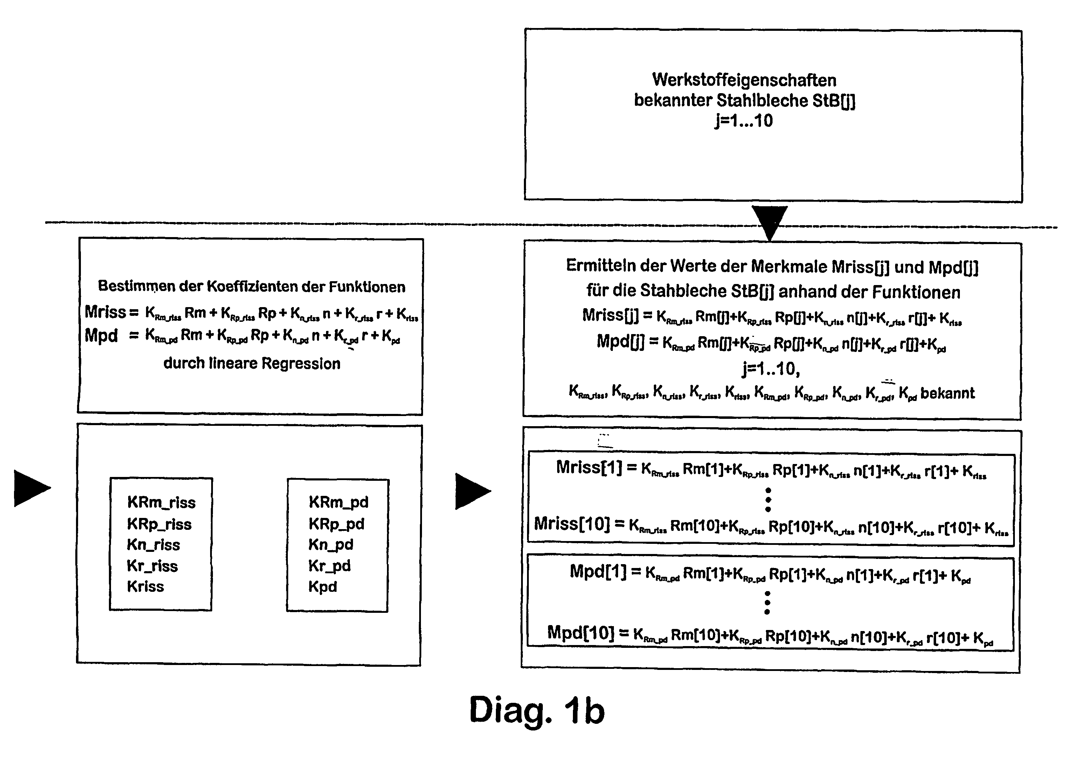

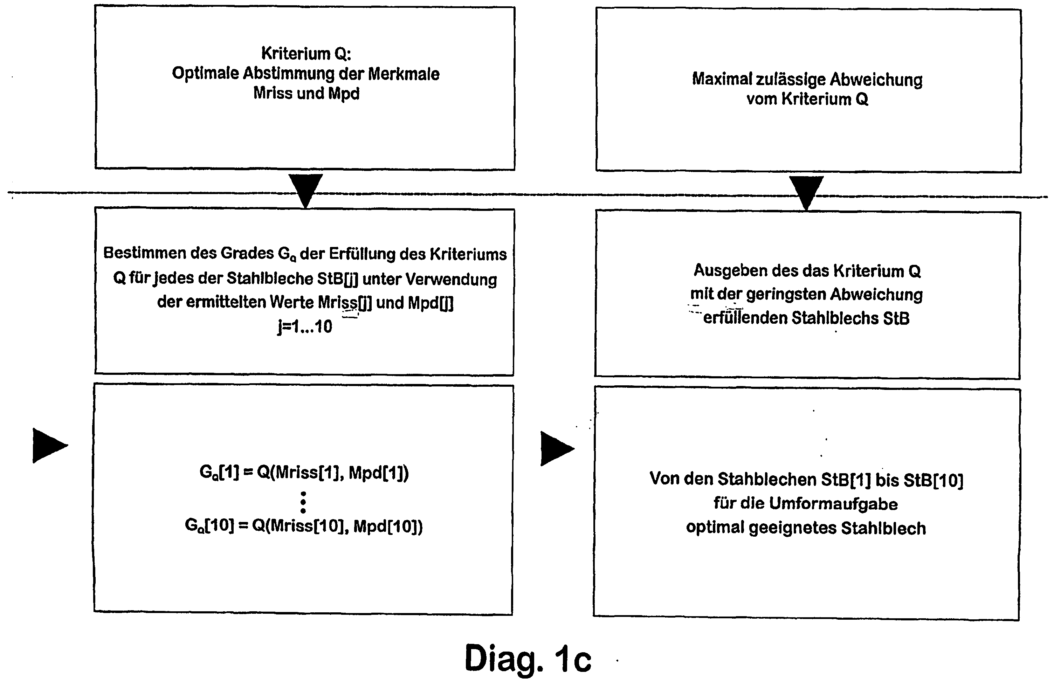

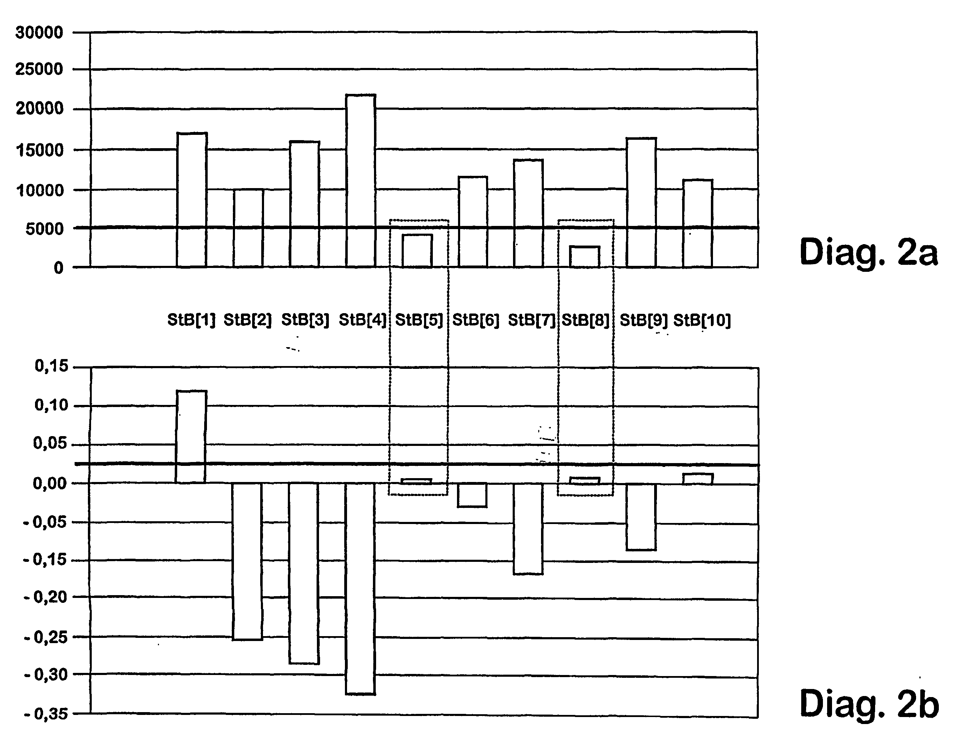

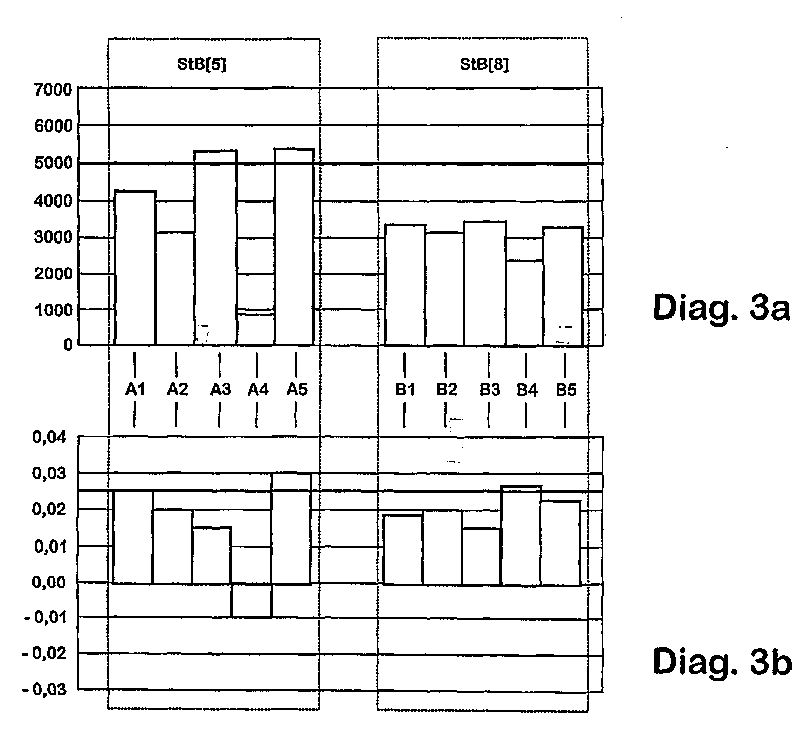

## Patentansprüche

1. Verfahren zum automatisierten Auswählen von Blechen für das Umformen zu Bauelementen umfassend folgende Schritte:

   a1) Bereitstellen der Werte der Werkstoffeigenschaften von für das Umformen grundsätzlich geeigneten Blechen,

   a2) Vorgeben der Grenzen von Sollbereichen, innerhalb welcher für das Umformverhalten bestimmende Werkstoffeigenschaften des endlich ausgewählten Blechs liegen sollen,

   a3) Festlegen einer den Einfluß der betreffenden Werkstoffeigenschaften auf mindestens ein Merkmal des Umformverhaltens der Bleche beschreibenden mathematischen Funktion, in der den betreffenden Werkstoffeigenschaften jeweils Variablen zugeordnet sind und mindestens einer der Variablen ein zu diesem Zeitpunkt unbestimmter Koeffizient zugeordnet ist,

   b) Ermitteln der Werte des Merkmals des Umformverhaltens für jeweils unterschiedliche Kombinationen von Werten der Werkstoffeigenschaften, wobei die miteinander kombinierten Werte jeweils den im Schritt a2) vorgegebenen Sollbereichen der Werkstoffeigenschaften entnommen sind und die Anzahl der Kombinationen, für die das Merkmal der Umformbarkeit jeweils bestimmt wird, mindestens gleich der Anzahl der unbestimmten Koeffizienten der mathematischen Funktion ist,

   c) Bestimmen der bis dahin unbestimmten Koeffizienten der im Schritt a3) vorgegebenen mathematischen Funktion,

   d) Bestimmen des jeweiligen Wertes des Merkmals der Umformeigenschaft für jedes Blech, dessen Werte der Werkstoffeigenschaften im Schritt a1) bereitgestellt worden sind, durch Einsetzen der Werte der Werkstoffeigenschaften des jeweiligen Blechs in die mathematische Funktion unter Verwendung der in Schritt c) bestimmten Koeffizienten,

   e) Ausgeben des Blechs, für welches das im Schritt d) bestimmte Merkmal der Umformeigenschaft unter Berücksichtigung eines vorgegebenen Auswahlkriteriums am besten erfüllt ist.

2. Verfahren nach Anspruch 1, **dadurch gekennzeichnet, daß** die mathematische Funktion eine lineare Funktion ist.

3. Verfahren nach Anspruch 2, **dadurch gekennzeichnet, daß** die mathematische Funktion mindestens vier Variablen enthält.

4. Verfahren nach Anspruch 3, **dadurch gekennzeichnet, daß** eine der Variablen die Streckgrenze, eine die Zugfestigkeit, eine der Verfestigungsexponent und eine der mittleren r-Wert zugeordnet ist.

5. Verfahren nach einem der voranstehenden Ansprüche, **dadurch gekennzeichnet, daß** im Schritt b) Werte der Werkstoffeigenschaften miteinander kombiniert werden, die jeweils einer der Grenzen der Sollbereiche der Werkstoffeigenschaften entsprechen.

6. Verfahren nach einem der voranstehenden Ansprüche, **dadurch gekennzeichnet, daß** die Schritte a3) bis d) für mindestens zwei unterschiedliche Merkmale der Umformeigenschaft ermittelt werden und **daß** das im Schritt e) berücksichtigte Auswahlkriterium die Einhaltung eines Sollwertes für jedes dieser Merkmale berücksichtigt.

**EP 1 392 455 B1**

**7.** Verfahren nach einem der voranstehenden Ansprüche, **dadurch gekennzeichnet, daß** für eine bestimmte Anzahl von Blechen ausgewählter Chargen derjenigen Blechsorten, denen das im Schritt e) ausgegebene Blech angehört, die Werkstoffeigenschaften bestimmt werden, **daß** für jedes der ausgewählten Bleche der jeweilige Wert des Merkmals der Umformeigenschaft entsprechend dem Schritt d) bestimmt wird und **daß** diejenigen Bleche der Blechsorte bei der Umformung nicht berücksichtigt werden, welche das Auswahlkriterium nicht erfüllen.

**8.** Verfahren nach einem der voranstehenden Ansprüche, **dadurch gekennzeichnet, daß** im Schritt b) die Werte des Merkmals der Umformeigenschaften mittels eines mathematischen, das Umformverhalten beschreibenden Modells ermittelt werden.

**9.** Verfahren nach Anspruch 8, **dadurch gekennzeichnet, daß** als mathematisches Modell die Finite-Elemente-Methode angewendet wird.

**Claims**

**1.** Method for the automated selection of sheet metal for forming into components, comprising the following steps:

a1) supplying the values of material properties of sheet metal intrinsically suitable for the forming,
a2) specifying the limits of setpoint ranges within which material properties crucial for the forming behaviour of the finally selected metal sheet should lie,
a3) establishing a mathematical function describing the effect of the relevant material properties on at least one feature of the forming behaviour of the sheet metal, in which variables are respectively assigned to the relevant material properties and a coefficient undetermined at this time is assigned to at least one of the variables,
b) finding the values of the feature of the forming behaviour for respectively different combinations of values of material properties, the values combined together being respectively taken from the setpoint ranges of the material properties as specified in step a2), and the number of combinations for which the formability feature is respectively determined being at least equal to the number of undetermined coefficients of the mathematical function,
c) determining the as yet undetermined coefficients of the mathematical function specified in step a3),
d) determining the respective value of the feature of the forming property for each metal sheet whose material property values were provided in step a1), by substituting the values of the material properties of the respective metal sheet into the mathematical function using the coefficients determined in step c),
e) outputting the metal sheet for which the feature of the forming property as determined in step d) is best fulfilled while taking a predetermined selection criterion into account.

**2.** Method according to Claim 1, **characterised in that** the mathematical function is a linear function.

**3.** Method according to Claim 2, **characterised in that** the mathematical function contains at least four variables.

**4.** Method according to Claim 3, **characterised in that** the yield point is assigned to one of the variables, the tensile strength to another, the work hardening factor to another and the average r value to another.

**5.** Method according to one of the preceding claims, **characterised in that** values of the material properties which respectively correspond to one of the limits of the setpoint ranges of the material properties are combined together in step b).

**6.** Method according to one of the preceding claims, **characterised in that** steps a3) to d) are performed for at least two different features of the forming property, and **in that** the selection criterion taken into account in step e) takes into account complying with a setpoint value for each of these features.

**7.** Method according to one of the preceding claims, **characterised in that** the material properties are determined for a particular number of metal sheets in selected batches of those sheet metal types to which the sheet metal output in step e) belongs, **in that** the respective value of the feature of the forming property is determined according to step d) for each of the selected metal sheets, and **in that** those metal sheets of the sheet metal types which do not fulfil the selection criterion are excluded from the forming.

7

8. Method according to one of the preceding claims, **characterised in that** the values of the feature of the forming property are found in step b) by means of a mathematical model describing the forming behaviour.

9. Method according to Claim 8, **characterised in that** the finite element method is employed as the mathematical model.


**Revendications**

1. Procédé de sélection automatique de tôles pour le formage de composants, comprenant les étapes suivantes :

   a1) mise à disposition des valeurs de propriétés de matière des tôles fondamentalement appropriées pour le formage,
   a2) fixation des limites de l'intervalle cible, au sein duquel les propriétés de matière déterminant le comportement de formage de la tôle finalement choisie doivent se trouver,
   a3) établissement d'une fonction mathématique décrivant l'influence de la propriété de matière en question sur au moins une caractéristique du comportement de formage de la tôle, dans laquelle des variables sont attribuées chaque fois, aux propriétés de matière en question et au moins une des variables est attribuée à un coefficient indéterminé à ce moment,
   b) détermination de la valeur de la caractéristique du comportement de formage pour chaque combinaison différente de valeurs des propriétés de matière, où les valeurs combinées les unes avec les autres sont prélevées chaque fois, dans les intervalles cibles donnés à l'étape a2) des propriétés de matière et où le nombre de combinaisons, pour lequel la caractéristique de formabilité est chaque fois déterminée, est au moins identique au nombre des coefficients indéterminés de la fonction mathématique,
   c) détermination des coefficients jusque là indéterminés de la fonction mathématique fixée à l'étape a3),
   d) détermination de chaque valeur de la caractéristique de propriété de formage pour chaque tôle, dont les valeurs des propriétés de matière ont été établies à l'étape a1), par introduction des valeurs des propriétés de matière de chaque tôle dans la fonction mathématique en utilisant les coefficients déterminés à l'étape c),
   e) émission des tôles, pour lesquelles la caractéristique déterminée à l'étape d), de la propriété de formage est remplie au mieux, en tenant compte d'un critère prédéterminé de sélection.

2. Procédé selon la revendication 1, **caractérisé en ce que** la fonction mathématique est une fonction linéaire.

3. Procédé selon la revendication 2, **caractérisé en ce que** la fonction mathématique contient au moins quatre variables.

4. Procédé selon la revendication 3, **caractérisé en ce qu'**une des variables est attribuée à la limité d'étirage, une à la résistance en traction, une à l'indice de consolidation et une à la valeur r moyenne.

5. Procédé selon l'une quelconque des revendications précédentes, **caractérisé en ce que** les valeurs des propriétés de matière, déterminées à l'étape b), sont combinées les unes avec les autres, qui correspondent chaque fois à une des limites de l'intervalle cible de la propriété de matière.

6. Procédé selon l'une quelconque des revendications précédentes, **caractérisé en ce que** l'on détermine les étapes a3) à d) pour au moins deux caractéristiques différentes de la propriété de formage et **en ce que** le critère de sélection considéré à l'étape e) tient compte du maintien d'une valeur cible pour chacune de ces caractéristiques.

7. Procédé selon l'une quelconque des revendications précédentes, **caractérisé en ce que** les charges sélectionnées pour un nombre déterminé de tôles de chaque type de tôle, auquel appartient la tôle émise à l'étape e), des propriétés de matière sont déterminées, **en ce que** pour chacune des tôles sélectionnées, on détermine la valeur de la caractéristique de propriété de formage correspondant à l'étape d) et **en ce que** l'on ne considère pas pour le formage, les tôles du type de tôle, qui ne remplit pas le critère de sélection.

8. Procédé selon l'une quelconque des revendications précédentes, **caractérisé en ce qu'**à l'étape b), les valeurs de la caractéristique des propriétés de formage sont déterminées à l'aide d'un modèle mathématique décrivant le comportement de formage.

9. Procédé selon la revendication 8, **caractérisé en ce que** l'on utilise comme modèle mathématique, le procédé

des éléments finis.

**Sollbereiche der Werkstoffeigenschaften:**

$$Rm_{min} \leq Rm \leq Rm_{max}$$
$$Rp_{min} \leq Rp \leq Rp_{max}$$
$$n_{min} \leq n \leq n_{max}$$
$$r_{min} \leq r \leq r_{max}$$

**FEM-Modell des herzustellenden Bauteils**

**Funktionen, die den Einfluß der Werkstoffeigenschaften auf die Merkmale "Rißversagen Mriss" und "Fläche mit ungenügender plastische Dehnung Mpd" beschreiben:**

$$\widetilde{Mriss} = K_{Rm\_riss}\,Rm + K_{Rp\_riss}\,Rp + K_{n\_riss}\,n + K_{r\_riss}\,r + K_{riss}$$
$$\widetilde{Mpd} = K_{Rm\_pd}\,Rm + K_{Rp\_pd}\,Rp + K_{n\_pd}\,n + K_{r\_pd}\,r + K_{pd}$$

**Bilden von Kombinationen K[1] - K[8] der Werte von Werkstoffeigenschaften**

**Ermitteln der Werte der Merkmale "Rißversagen Mriss" "Plastische Dehnung Mpd" durch FEM-Berechnung für die Kombinationen K1-K8**

$$\sum_{J=1}^{8}(Mriss(j) - \widetilde{Mriss}(j))^2 \rightarrow Minimum$$

$$\sum_{J=1}^{8}(Mpd(j) - \widetilde{Mpd}(j))^2 \rightarrow Minimum$$

| | | | |
|---|---|---|---|
| K[1] | $Rm_{min}$ | $Rp_{min}$ | $n_{min}$ $r_{min}$ |
| K[2] | $Rm_{min}$ | $Rp_{min}$ | $n_{max}$ $r_{max}$ |
| K[3] | $Rm_{min}$ | $Rp_{max}$ | $n_{min}$ $r_{max}$ |
| K[4] | $Rm_{min}$ | $Rp_{max}$ | $n_{max}$ $r_{min}$ |
| K[5] | $Rm_{max}$ | $Rp_{min}$ | $n_{min}$ $r_{max}$ |
| K[6] | $Rm_{max}$ | $Rp_{min}$ | $n_{max}$ $r_{min}$ |
| K[7] | $Rm_{max}$ | $Rp_{max}$ | $n_{min}$ $r_{min}$ |
| K[8] | $Rm_{max}$ | $Rp_{max}$ | $n_{max}$ $r_{max}$ |

| | |
|---|---|
| Mriss[1] = FEM (K[1]) | Mpd[1]=FEM (K[1]) |
| Mriss[2] = FEM (K[2]) | Mpd[2]=FEM (K[2]) |
| Mriss[3] = FEM (K[3]) | Mpd[3]=FEM (K[3]) |
| Mriss[4] = FEM (K[4]) | Mpd[4]=FEM (K[4]) |
| Mriss[5] = FEM (K[5]) | Mpd[5]=FEM (K[5]) |
| Mriss[6] = FEM (K[6]) | Mpd[6]=FEM (K[6]) |
| Mriss[7] = FEM (K[7]) | Mpd[7]=FEM (K[7]) |
| Mriss[8] = FEM (K[8]) | Mpd[8]=FEM (K[8]) |

## Diag. 1a

Werkstoffeigenschaften
bekannter Stahlbleche StB[j]
j=1...10

Bestimmen der Koeffizienten der Funktionen

$Mriss = K_{Rm\_riss} Rm + K_{Rp\_riss} Rp + K_{n\_riss} n + K_{r\_riss} r + K_{riss}$

$Mpd = K_{Rm\_pd} Rm + K_{Rp\_pd} Rp + K_{n\_pd} n + K_{r\_pd} r + K_{pd}$

durch lineare Regression

KRm_riss    KRm_pd
KRp_riss    KRp_pd
Kn_riss     Kn_pd
Kr_riss     Kr_pd
Kriss       Kpd

Ermitteln der Werte der Merkmale Mriss[j] und Mpd[j]
für die Stahbleche StB[j] anhand der Funktionen

$Mriss[j] = K_{Rm\_riss} Rm[j]+K_{Rp\_riss} Rp[j]+K_{n\_riss} n[j]+K_{r\_riss} r[j]+ K_{riss}$

$Mpd[j] = K_{Rm\_pd} Rm[j]+K_{Rp\_pd} Rp[j]+K_{n\_pd} n[j]+K_{r\_pd} r[j]+K_{pd}$

j=1..10,

$K_{Rm\_riss}, K_{Rp\_riss}, K_{n\_riss}, K_{r\_riss}, K_{riss}, K_{Rm\_pd}, K_{Rp\_pd}, K_{n\_pd}, K_{r\_pd}, K_{pd}$ bekannt

$Mriss[1] = K_{Rm\_riss} Rm[1]+K_{Rp\_riss} Rp[1]+K_{n\_riss} n[1]+K_{r\_riss} r[1]+ K_{riss}$

⋮

$Mriss[10] = K_{Rm\_riss} Rm[10]+K_{Rp\_riss} Rp[10]+K_{n\_riss} n[10]+K_{r\_riss} r[10]+ K_{riss}$

$Mpd[1] = K_{Rm\_pd} Rm[1]+K_{Rp\_pd} Rp[1]+K_{n\_pd} n[1]+K_{r\_pd} r[1]+ K_{pd}$

⋮

$Mpd[10] = K_{Rm\_pd} Rm[10]+K_{Rp\_pd} Rp[10]+K_{n\_pd} n[10]+K_{r\_pd} r[10]+ K_{pd}$

## Diag. 1b

Kriterium Q:
Optimale Abstimmung der Merkmale
Mriss und Mpd

Maximal zulässige Abweichung
vom Kriterium Q

Bestimmen des Grades $G_q$ der Erfüllung des Kriteriums
Q für jedes der Stahlbleche StB[j] unter Verwendung
der ermittelten Werte Mriss[j] und Mpd[j]
j=1...10

Ausgeben des das Kriterium Q
mit der geringsten Abweichung
erfüllenden Stahlblechs StB

$$G_q[1] = Q(Mriss[1], Mpd[1])$$
$$\vdots$$
$$G_q[10] = Q(Mriss[10], Mpd[10])$$

Von den Stahblechen StB[1] bis StB[10]
für die Umformaufgabe
optimal geeignetes Stahlblech

# Diag. 1c

Diag. 2a

Diag. 2b

StB[1] StB[2] StB[3] StB[4] StB[5] StB[6] StB[7] StB[8] StB[9] StB[10]

Diag. 3a

Diag. 3b